Europäisches Patentamt

European Patent Office

Office européen des brevets

(19)

(11) **EP 1 231 568 B1**

(12) **FASCICULE DE BREVET EUROPEEN**

(45) Date de publication et mention
de la délivrance du brevet:
**17.11.2004 Bulletin 2004/47**

(51) Int Cl.⁷: **G06T 15/70**

(21) Numéro de dépôt: **02290254.8**

(22) Date de dépôt: **04.02.2002**

(54) **Dispositif de simulation de déformations de matériaux, notamment de tissus corporels mous**

Materialverbiegungssimulationsgerät inbesondere für weiche Körpergewebe

Material deformations simulation device specially for soft body tissues

(84) Etats contractants désignés:
**AT BE CH CY DE DK ES FI FR GB GR IE IT LI LU MC NL PT SE TR**

(30) Priorité: **08.02.2001 FR 0101717**

(43) Date de publication de la demande:
**14.08.2002 Bulletin 2002/33**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeurs:
• **Ayache, Nicholas
06000 Nice (FR)**
• **Delingette
06600 Antibes (FR)**
• **Picinbono, Guillaume
06100 Nice (FR)**

(74) Mandataire: **Plaçais, Jean-Yves
Cabinet Netter,
36, avenue Hoche
75008 Paris (FR)**

(56) Documents cités:
**FR-A- 2 771 202**

## Description

L'invention concerne la simulation de déformations de matériaux, notamment de tissus corporels mous.

Il est prévu habituellement une interface de visualisation pour représenter au moins un objet suivant une forme prédéterminée, maillée avec un motif de maille choisi. Une interface utilisateur munie d'un organe mécanique de saisie permet de simuler une ou plusieurs forces exercées globalement sur l'objet.

Une zone-mémoire est prévue aussi pour stocker :

- des paramètres mécaniques du matériau dans lequel l'objet considéré est prévu sous forme tridimensionnelle,
- des données de position de l'objet, prises en des sommets d'un maillage choisi, et
- des données de force, représentant, en intensité et position, une sollicitation à exercer sur l'objet.

Un calculateur capable de coopérer avec la zone-mémoire évalue de nouvelles positions des sommets, en fonction de la sollicitation exercée et des paramètres mécaniques du matériau. Pour visualiser la déformation et/ou le retour à une position de repos de l'objet en mouvement, le calculateur détermine une évolution temporelle des positions des sommets en fonction de cette sollicitation. Dans une application à la simulation de la déformation (ou de la découpe) de tissus corporels, un personnel qualifié (tel qu'un chirurgien) peut suivre la simulation d'une déformation et/ou un retour à une position de repos.

Cependant, les déformations simulées avec de grands déplacements ne sont pas fiables habituellement.

La présente invention vient améliorer la situation.

L'invention est définie dans la revendication de dispositif 1 ci-jointe.

Dans une forme de réalisation préférée, le motif de maillage choisi comprend au moins une base triangulaire.

Ainsi, si l'objet présente la forme d'une enveloppe tridimensionnelle creuse, le maillage choisi est préférentiellement triangulaire, de sorte que le calculateur est apte à déterminer une composition des forces en chaque sommet de triangle, en fonction de l'écart entre la longueur courante de chaque arête du triangle et la longueur de cette arête au repos.

Si l'objet présente une forme tridimensionnelle pleine, le maillage choisi est préférentiellement tétraédrique, de sorte que le calculateur détermine une composition des forces en chaque sommet de tétraèdre, en fonction de l'écart entre la longueur courante de chaque arête du tétraèdre et la longueur de cette arête au repos.

Avantageusement, la zone-mémoire est agencée pour stocker, en association avec chaque maille, des paramètres mécaniques du matériau de la maille, au moins partiellement définis localement, en particulier au niveau de la maille ou d'éléments de celle-ci.

Dans la demande publiée FR-A-2 771 202 du Demandeur, la simulation des déformations de l'objet était, dans la réalisation décrite, basée sur un modèle linéaire. Bien que l'utilisation du dispositif décrit dans FR-A-2 771 202 s'est avérée très prometteuse dans le domaine de l'assistance chirurgicale pour la simulation de la découpe de tissus corporels mous (foie, peau, etc), la simulation de grands déplacements, le cas échéant non linéaires, n'était pas complètement naturelle. De plus, ce dispositif ne permettait pas de prévoir la réaction à une force exercée sur un type quelconque de matériau déformable, en particulier pour de grands déplacements.

Dans une réalisation préférée de la présente invention, le calculateur est agencé pour déterminer ledit écart de longueurs courante et au repos, en vue d'estimer une dérivée de l'énergie potentielle de déformation de chaque maille, exprimée en fonction d'un tenseur de Green-St Venant et de coefficients mécaniques propres au matériau dans cette maille.

La dérivée de l'énergie potentielle, ainsi exprimée, par rapport à la position du sommet, permet d'obtenir la force (ou la composition des forces) qui s'y exerce.

Dans l'estimation des dérivées de l'énergie potentielle aux sommets, exprimée ainsi en fonction d'un tenseur de Green-St Venant, le calculateur est agencé pour déterminer, plus précisément, des différences entre les carrés des longueurs courante et au repos de chaque arête, en vue de déterminer la composition des forces précitées.

Les paramètres mécaniques précités comprennent avantageusement les coefficients de Lamé du matériau dans chaque maille considérée.

Le dispositif selon l'invention permet alors de simuler des grands déplacements et/ou d'élasticité non linéaire, le cas échéant d'objets hétérogènes, réalisés dans des matériaux différents.

Il est possible ainsi de simuler la déformation d'un objet tridimensionnel plein, le cas échéant enveloppé dans une peau creuse. Il conviendra en l'espèce d'appliquer un maillage tétraédrique à l'objet et un maillage triangulaire à la peau et d'affecter à chaque type de maille des paramètres mécaniques adéquats. Il peut être prévu aussi de simuler les déplacements d'objets mous (tels que des muscles), en présence d'objets rigides et solidaires (tels que des os), comme on le verra plus loin.

La présente invention peut se manifester aussi sous la forme d'un procédé de simulation de déformations d'objets, notamment de tissus corporels mous, comprenant tout ou partie des étapes suivantes :

a) prévoir une forme prédéterminée de l'objet au repos,

b) mailler ladite forme, sur la base d'un motif choisi, préférentiellement de base triangulaire (triangle ou tétraèdre),

c) mémoriser les données de position des sommets des mailles dans l'objet au repos,

d) simuler une ou plusieurs forces exercées globalement sur l'objet (ou des déplacements de l'objet),

e) estimer, en fonction des propriétés mécaniques du matériau et des positions des sommets précédentes, une force résultante sur chaque sommet de chaque maille, et

f) en fonction de la force exercée sur chaque sommet, déterminer le déplacement et, de là, la déformation et/ou le retour à une position d'équilibre des sommets des mailles.

L'étape c) passe en outre par une attribution d'indices des éléments des mailles, dans le cadre de l'élaboration d'une structure de données, et, le cas échéant, par une simplification de la structure de l'objet, comme on le verra plus loin. Les étapes e) et f) s'appuient sur un modèle développé par le Demandeur et que l'on décrira en détail ci-après.

D'autres caractéristiques et avantages de l'invention apparaîtront à l'examen de la description détaillée ci-après, et des dessins annexés sur lesquels :

- la figure 1 représente schématiquement un dispositif selon une forme de réalisation de l'invention,

- les figures 2A et 2B représentent schématiquement des mailles triangulaires, respectivement initiale et déformée, avec les notations des points du triangle utilisées par la suite, dans l'estimation de la composition des forces en chaque sommet du triangle,

- la figure 3A est un schéma de tétraèdre aidant à comprendre les notations utilisées pour un point Pj du tétraèdre et le vecteur normal nj de la face opposée,

- les figures 3B à 3D sont des schémas de tétraèdres aidant à comprendre, avec la figure 3A précitée, comment se calculent des sommes sur des arêtes et des couples d'arêtes d'un tétraèdre, pour évaluer une force que subit un sommet Pp du tétraèdre,

- les figures 4A et 4B sont des schémas d'aide à la compréhension de l'attribution d'indices dans différentes mailles triangulaires,

- les figures 5A et 5B sont respectivement des schémas de motifs triangulaires comprenant un sommet courant (représenté par un carré) et un sommet virtuel (représenté par un disque), avant simplification, et de la même forme maillée après simplification,

- la figure 6 représente schématiquement un exemple d'un maillage triangulaire non conforme, et

- la figure 7 représente un organigramme schématique du déroulement des calculs de forces et de positions des sommets représentant l'objet.

La présente description fera mention de formules et d'équations qui sont retranscrites en annexe.

Les dessins, ainsi que l'annexe, contiennent, pour l'essentiel, des éléments de caractère certain. Ils pourront donc non seulement servir à mieux faire comprendre la description, mais aussi contribuer à la définition de l'invention, le cas échéant.

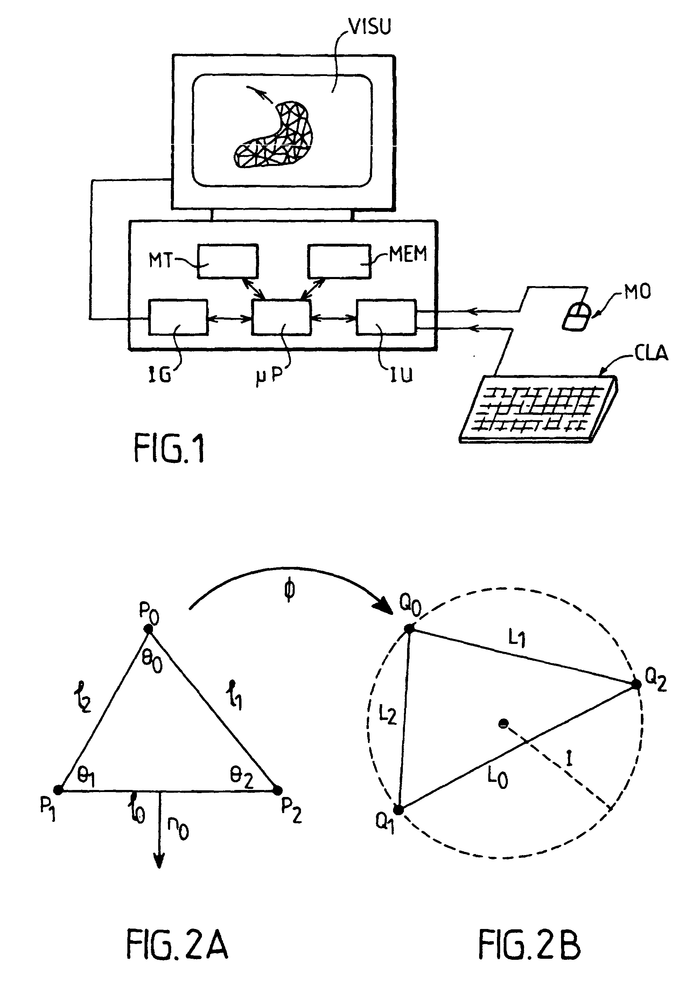

On se réfère tout d'abord à la figure 1, sur laquelle le dispositif se présente, dans la réalisation décrite, sous la forme d'un ordinateur PC. L'ordinateur comprend une mémoire permanente MEM (par exemple de type ROM) dans laquelle sont enregistrés des programmes de calcul des positions des sommets de maille et les forces résultantes en ces sommets, ainsi qu'un processeur $\mu$P capable de coopérer avec une mémoire de travail MT (par exemple de type RAM) pour effectuer ces calculs.

Les modules précités du calculateur décrit plus haut peuvent, le cas échéant, se présenter sous la forme de programmes stockés dans la mémoire MEM, ou encore être chargés dans la mémoire de travail MT, à partir de la lecture d'un support dans un périphérique externe (non représenté), tel qu'un lecteur de disquettes, de CD-ROM, ou encore reçus à partir d'une liaison de communication, par exemple par MODEM. Bien entendu, de tels programmes apparaissent comme des moyens particulièrement importants pour mettre en oeuvre l'invention. A ce titre, la présente invention vise aussi de tels programmes, le cas échéant sur un support du type précité (disquette, CD-ROM, etc), dont des exemples de réalisation détaillés seront donnés plus loin.

L'ordinateur comprend en outre un moniteur VISU relié au processeur $\mu$P par l'intermédiaire d'une interface graphique IG, l'ensemble VISU et IG (appelé "interface de visualisation" ci-avant) permettant de visualiser la forme d'un objet dont la déformation est simulée. L'ordinateur comprend encore une interface utilisateur IU relié à un organe mécanique de saisie tel qu'un clavier CLA ou une souris MO, permettant à un utilisateur de simuler une force globalement exercée sur l'objet, ou encore un déplacement, avec déformation initiale, de cet objet.

La forme de l'objet à mailler peut être une surface représentée en trois dimensions. Dans ce cas, le maillage est triangulaire (figure 2A). La forme de l'objet à mailler peut être une tridimensionnelle pleine et dans ce cas, le maillage est tétraédrique (figure 2B). Le cas échéant, un module de maillage est mémorisé dans la mémoire MEM et peut être mis en oeuvre par le processeur µP, en coopérant avec l'interface graphique IG, pour visualiser une forme de l'objet maillée sur le moniteur VISU.

Ce qui suit décrit un modèle développé par le Demandeur et appliqué à un dispositif de simulation de déformation. Dans ce modèle, on tient compte d'une forme de repos, sans raisonner par rapport à une position de repos (raisonnement en déplacements qui est habituellement la base des modèles classiques).

On considère d'abord une surface représentée en trois dimension, maillée selon un motif triangulaire. Un triangle T0 = (P0,P1,P2) de la forme au repos, d'arêtes $(1_0,1_1,1_2)$. Ce triangle (de gauche sur la figure 2A) subit une transformation Φ pour donner le triangle T = (Q0,Q1,Q2) (à droite de la figure 2B).

L'énergie potentielle élastique de cette déformation est exprimée ici à partir du tenseur de déformation de Cauchy-Green C (formule F1 de l'annexe). En considérant l'élément fini obtenu en associant à ce triangle un ensemble de fonctions d'interpolation linéaires, le gradient de la déformation s'exprime en tout point X du triangle par la formule F2, où $A$ est l'aire du triangle T0, nj est le vecteur unitaire perpendiculaire au segment (Pj+1,Pj+2), et les $\alpha$j sont les vecteurs de forme du triangle.

Le tenseur de déformation C devient alors donné par l'expression de la formule F3. Avantageusement, ce tenseur de déformation est invariant par translation et ne dépend donc pas du choix de l'origine du repère. Préférentiellement, l'origine du repère est placée au centre du cercle circonscrit au triangle déformé T, de rayon r (figure 2A), ce qui permet d'exprimer le tenseur C sous la forme donnée à la formule F4, où Lp est la longueur de l'arête déformée joignant les sommets Qj et Qk.

L'expression de l'énergie potentielle de déformation (donnée par la formule F5 de l'annexe) utilise celles de la trace du tenseur C (donnée par la formule F6) et de la trace du tenseur $C^2$ (que l'on décrira plus loin).

À partir des relations classiques dans le triangle T0 (loi des cosinus), qui s'expriment par la formule F7, on obtient les produits scalaires entre les vecteurs directeurs, donnés par la relation R1 de l'annexe. Les traces respectives des tenseurs C et E s'écrivent alors selon les formules 8 et 9 données en annexe. Ce terme ne dépend que des variations de longueur des arêtes du triangle et de sa forme au repos (représentée par les grandeurs Ki).

De l'expression de tr $C^2$ (formule F10), on déduit tr$E^2$ et, finalement, l'énergie potentielle élastique de déformation du triangle est donnée par la relation R2 de l'annexe.

La force élastique appliquée par le triangle sur un de ses sommets s'obtient en dérivant l'énergie élastique par rapport à la position de ce sommet. Dans l'exemple représenté sur la figure 2A, le sommet P0 a pour position déformée Q0. En dérivant la relation R2 par rapport à Q0, on commence préférentiellement par dériver les termes $L^2$p pour obtenir l'expression de la force suivant la formule F11, qui est l'équation de la force élastique exercée par le triangle sur chacun de ses sommets. Cette force s'exprime bien uniquement en fonction des variations de longueur des arêtes du triangle ($L_i^2 - l_i^2$), des paramètres mécaniques du matériau ($\lambda$ et $\mu$) et de la forme du triangle au repos (donnée par les termes Ki).

Avantageusement, cette force contient implicitement une propriété d'invariance par rotation puisque tous ses termes restent nuls tant que les longueurs des arêtes du triangle ne changent pas, c'est-à-dire tant que le triangle ne se déforme pas. Ainsi, les calculs de déplacements peuvent se simplifier du fait qu'il n'est plus nécessaire de compenser les transformations rigides, l'invariance par transformation rigide étant intrinsèque à la formulation du modèle déformable.

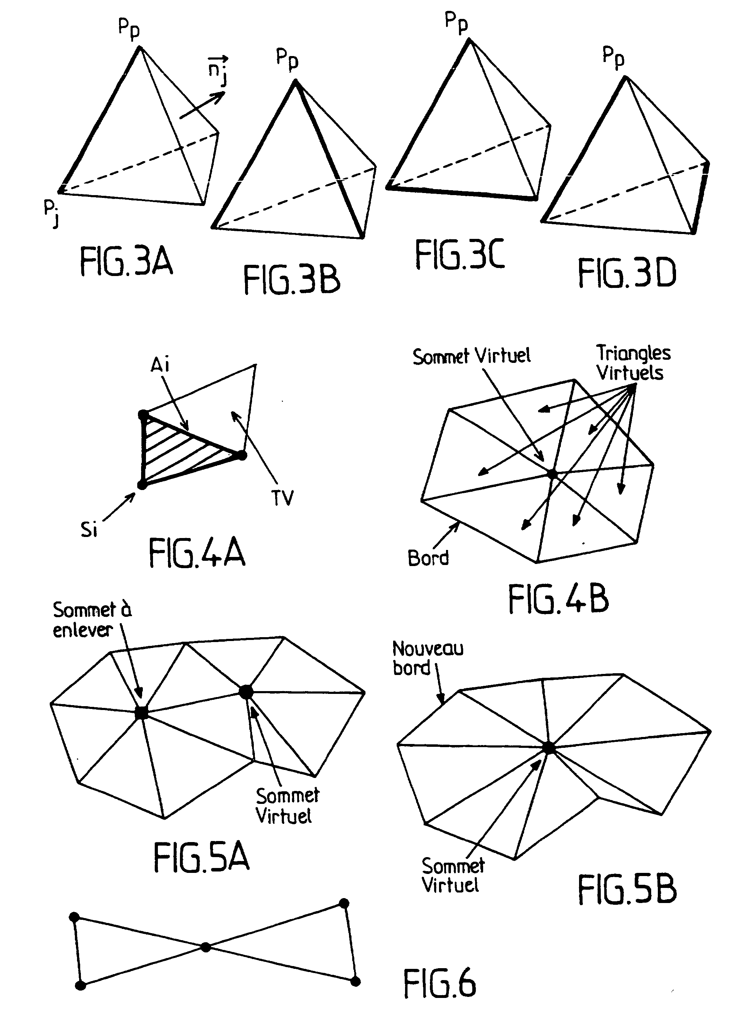

En étendant ce qui précède à une forme tridimensionnelle pleine (cas volumique), maillée avec des tétraèdres, la formulation de l'élasticité selon Saint Venant-Kirchhoff permet d'exprimer le gradient de la déformée (formule F12), ainsi que le tenseur de déformation de Cauchy-Green (formule F13), où $Aj$ est l'aire de la face opposée au sommet Pj, nj est la normale à cette face et $V$ est le volume du tétraèdre (figure 3A).

En plaçant le centre du repère au centre de la sphère circonscrite au tétraèdre T, on peut exprimer le produit scalaire des vecteurs position de deux sommets du tétraèdre en fonction de la longueur de l'arête qui les joint et du rayon r de la sphère, ce qui permet d'écrire le tenseur de déformation selon la formule F14.

L'énergie élastique de déformation s'exprime en fonction du tenseur de déformation de Green-Saint Venant (référencé E), mais, dans une maille 3D (formule F15). L'expression de la trace du tenseur C s'exprime encore avec les produits scalaires ($\alpha$j.$\alpha$k), en utilisant la loi des cosinus pour les angles dièdres et en fonction des longueurs des arêtes du tétraèdre (formules 16 et 17). Aussi, la trace de $C^2$ s'écrit selon la formule F18. Finalement, le Demandeur montre que l'énergie élastique de déformation s'exprime par la formule F19 de l'annexe (complétée par la formule F20).

L'expression de la force élastique exercée par le tétraèdre sur un de ses sommets s'obtient en dérivant l'énergie élastique par rapport à la position de ce sommet. Une formulation facilement utilisable s'exprime par la formule F21 de l'annexe et s'interprète à l'aide des figures 3A à 3D.

Dans la formule F21 :

- dans la deuxième ligne, k et m sont les indices complémentaires de j et p,
- dans la dernière ligne, m est l'indice complémentaire de j, k et p, et : $K_{jkmp} = K_{jp}K_{km}+K_{jm}K_{kp}-K_{jk}K_{mp}$

La somme sur les arêtes *(j,p)* signifie qu'il faut parcourir les trois arêtes adjacentes au sommet Pp (sur lequel s'exerce la force) tandis que la somme sur les arêtes *(j,k)* (indices différents de p) fait intervenir les trois arêtes situées sur la face opposée au sommet Pp.

En se référant aux figures 3A à 3D :

- la somme sur les arêtes (j,p) fait intervenir trois termes (figure 3A),
- la somme sur les couples d'arêtes ((j,p),(k,p)) fait intervenir trois termes (figure 3B),
- la somme sur les couples d'arêtes ((j,p),(j,k)) fait intervenir six termes (figure 3C) et
- la somme sur les couples d'arêtes ((j,k),(m,p)) fait intervenir trois termes (figure 3D).

Il apparaît encore une invariance par rotation des expressions ci-avant, pour une forme tridimensionnelle pleine, ce qui permet avantageusement d'éviter l'apparition de distorsions irréalistes lorsqu'une partie de l'objet subit une rotation trop importante. Cette invariance s'étend aussi à la translation. Ainsi, l'objet peut subir un mouvement global quelconque de translation et de rotation tout en conservant une énergie et des contraintes internes nulles. Le Demandeur a vérifié que, dans ce cas, la composante rigide de la déformation est nulle.

De plus, la discrétisation de l'objet en utilisant des éléments finis revient à approximer l'énergie élastique sur un ensemble de sous-domaines définis par des formes géométriques simples. Le modèle ci-avant propose ainsi, sur chaque sous-domaine, une formulation de l'énergie qui ne dépend que du changement de forme de ce domaine.

Avantageusement, la visualisation d'une déformation simulée en considérant une forme de repos initiale (plutôt que des positions de repos initiales) paraît plus naturelle que celles simulées avec les modèles connus. De plus, la considération d'une forme de repos initiale évite les problèmes de précision qui apparaissent lorsque le modèle s'éloigne notablement de sa position de repos.

Ce qui suit décrit des préliminaires à une mise en oeuvre des modules précités du calculateur pour la détermination des forces en chaque sommet du maillage choisi.

Il convient tout d'abord de définir une structure de données. Le Demandeur s'est d'abord confronté à la difficulté d'attribuer des indices adéquats aux éléments de chaque maille.

Pour des motifs triangulaires, la structure de donnée correspondant à une triangulation consiste en une liste de triangle, une liste d'arêtes et une liste de sommets :

- pour chaque sommet, on détermine une arête adjacente,
- pour chaque arête, on détermine un pointeur sur les deux triangles adjacents, et les deux sommets qui forment l'arête,
- pour chaque triangle, on détermine les pointeurs sur les trois sommets qui forment le triangle, les trois arêtes du triangle, les trois triangles adjacents à chaque arête, ainsi que trois valeurs donnant l'indice d'adjacence du triangle courant pour chaque triangle adjacent.

L'orientation des trois sommets dans le triangle se fait comme suit.

Pour que le maillage global soit correctement orienté, il faut que chaque arête soit parcourue dans deux sens différents lorsque l'on parcoure chacun de ses deux triangles adjacents. En se référant à la figure 4A, l'arête Ai d'indice i est l'arête opposée au sommet Si d'indice i dans ce triangle. Le triangle adjacent d'indice i est le triangle voisin TV, adjacent à l'arête Ai. Enfin, chaque triangle a toujours trois triangles adjacents. Pour représenter des surfaces à bords (un plan a un bord, un cylindre a deux bords) on utilise la notion de sommets et de triangles dits « virtuels » (figure 4B). Les triangles virtuels ne sont pas affichés et la position du sommet virtuel n'a pas de conséquence sur la géométrie du maillage.

On donne ci-après un exemple, en langage C++, d'une attribution d'indice.

Si on appelle neighbor[i], le triangle adjacent numéro i, alors l'indice d'adjacence « whichNeighbor[i] » est définie par une instruction telle que :

```
Neighbor[i]->neighbor[whichNeighbor[i]]=this ;
```

Pour des motifs de maillages tétraédriques, la structure de donnée d'un volume de tétraèdre consiste en une liste de tétraèdres, une liste de triangles, une liste d'arêtes et une liste de sommets.

Pour chaque sommet, on stocke sa position, un tétraèdre adjacent.

Pour chaque arête, on stocke les pointeurs sur les deux sommets adjacents et un pointeur sur un triangle adjacent à cette arête.

Pour chaque triangle, on stocke les pointeurs sur les trois sommets qui forment le triangle et les pointeurs sur les deux tétraèdres qui sont adjacents au triangle.

Pour chaque tétraèdre, on stocke :

- les pointeurs sur les quatre sommets qui forment le tétraèdre,
- les pointeurs sur les six arêtes du tétraèdre,
- les pointeurs sur les quatre triangles du tétraèdre, et
- les pointeurs sur les quatre tétraèdres voisins opposés à chacun des quatre sommets.

Chaque tétraèdre est orienté. A partir de l'orientation des quatre sommets ABCD , on cherche l'orientation des quatre triangles : BCD, ADC, ABD, ACB. Pour que le maillage soit correctement orienté, il faut que chaque triangle soit parcouru dans deux sens différents en parcourant chacun de ses deux tétraèdres adjacents. Enfin chaque tétraèdre est toujours adjacents à quatre tétraèdres. On introduit la notion de sommets dits «virtuels» et de «tétraèdres virtuels» pour prendre en compte les bords du maillage.

Pour simplifier la structure de l'objet déformé, on procède à une découpe de maillage en enlevant de la matière (plus précisément un sommet, en imposant néanmoins que ce sommet ne peut pas être un sommet virtuel).

Dans le cas d'un maillage triangulaire, si ce sommet n'est pas adjacent à un sommet virtuel, alors on considère ce sommet comme étant virtuel ainsi que tous ces triangles adjacents. Si le sommet est déjà adjacent à un sommet virtuel, alors on enlève l'arête qui relie ce point au sommet virtuel, et on force tous les triangles adjacents au sommet virtuel à être virtuel (figures 5A et 5B).

Avec un motif de maillage tétraédrique, on procède en enlevant un ensemble connexe de tétraèdres. Une fois les tétraèdres enlevés, le maillage doit rester conforme, comme décrit ci-après. Pour cela, il peut être avantageux d'enlever plus de tétraèdres que ceux présents dans l'ensemble de tétraèdres indiqué au départ. On peut aussi ajouter ou enlever des sommets virtuels lorsque l'on crée des composantes connexes ou que l'on supprime des bords.

Le Demandeur s'est confronté à la difficulté d'assurer une conformité du maillage, dont on donne une définition ci-après.

Pour qu'un maillage triangulaire soit conforme, chaque arête doit appartenir au plus à deux triangles et le voisinage topologique de chaque sommet doit rester homéomorphe à un cercle (ou à un demi-cercle), c'est-à-dire que, si deux triangles partagent un même sommet, alors il doit exister un ensemble de triangles adjacents entre eux qui permettent de passer d'un triangle à un autre. En se référant à la figure 6, le maillage triangulaire représenté est non conforme car les deux triangles ont une intersection suivant un sommet, tandis qu'il n'existe pas de triangles adjacents permettant de passer de l'un à l'autre de ces deux triangles.

Pour qu'un maillage tétraédrique soit conforme, il faut que chaque triangle appartienne au plus à deux tétraèdres et que le voisinage topologique de chaque sommet soit homéomorphe à une sphère (ou une demi-sphère s'il est sur le bord). Il faut donc que, si deux tétraèdres partagent un même sommet, alors il existe un ensemble de tétraèdres adjacents entre eux qui permettent de passer d'un tétraèdre à un autre.

L'équation qui gouverne le mouvement du modèle élastique linéaire est l'équation différentielle Newtonienne E1 de l'annexe. Cette équation est reliée aux équations différentielles rencontrées en mécanique des milieux continus (équation E2).

D'après la théorie des éléments finis, la matrice de masse $M$ et la matrice d'amortissement $C$ sont creuses et dépendent des propriétés de chaque tétraèdre. De plus, ces matrices $M$ et $C$ peuvent être considérées ici comme diagonales, c'est-à-dire que la masse et les effets d'amortissement sont concentrés sur les sommets du maillage. Cette simplification, appelée *masse-lumping*, découple les mouvements de chacun des noeuds et permet donc d'écrire l'équation précédente E2 comme un ensemble d'équations différentielles indépendantes du type E1, avec une équation pour chaque sommet.

Le choix d'un schéma d'intégration explicite mène à exprimer les forces élastiques à l'instant $t$, pour calculer la nouvelle position du sommet à l'instant $t+1$, avec l'équation E3 de l'annexe. Avantageusement, cette équation E3 est valable pour tout type de force, linéaire ou non.

Les schémas explicites sont seulement conditionnellement stables, ils convergent donc moins vite que les schémas implicites.

Une autre difficulté s'est présentée : pour que le schéma soit stable, le pas de temps utilisé pour l'intégration numérique doit être suffisamment petit. Le pas de temps critique dépend de la plus grande valeur propre de la matrice de rigidité et des valeurs locales de la masse et de l'amortissement. Pour optimiser le pas de temps, la matrice de masse est fixée comme étant égale à l'identité, et l'optimisation des valeurs locales de l'amortissement, afin de limiter les risques d'oscillations, ont pour effet d'améliorer le conditionnement du système linéaire, et donc d'en stabiliser la résolution.

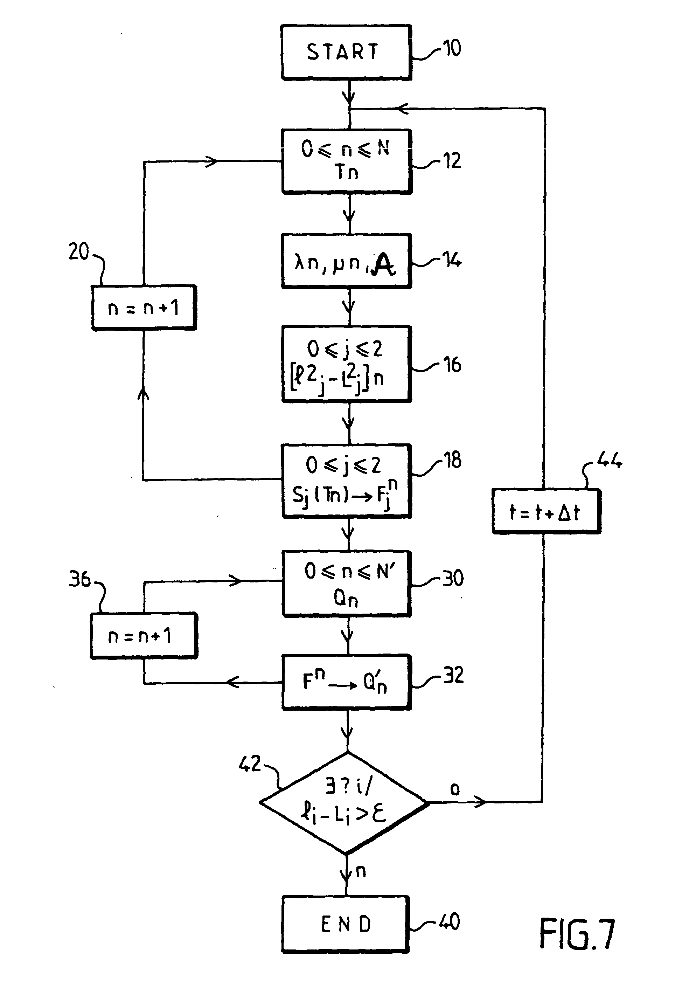

On se réfère maintenant à la figure 7, sur laquelle un organigramme représente schématiquement les différentes étapes de traitement appliquées à une surface tridimensionnelle triangulée, à titre d'exemple.

Le traitement commence par une première étape 10, en laquelle on applique la structure des données décrites ci-avant, avec une attribution d'indices adéquats. On considère ensuite chaque triangle $T_n$ à l'étape 12, pour lequel on cherche les coefficients de Lamé $\lambda_n$ et $\mu_n$, ainsi que l'aire du triangle $A$ (étape 14). Pour chaque arête du triangle (j étant un entier de 0 à 2), on calcule la différence des carrés des longueurs d'arêtes, entre la longueur courante $l_j$ et la longueur d'arête précédente $L_j$ (étape 16). De ces différences de longueurs d'arêtes au carré, on déduit les forces exercées en chaque sommet $S_j$ du triangle $T_n$ (force $F_j{}^n$ calculée à l'étape 18 de l'organigramme). En passant aux triangles suivants, on intègre les forces sur tous les triangles en bouclant sur l'indice n (étape 20).

Aux étapes 30 et 32, on détermine les nouvelles positions $Q'_n$ des sommets $S_j$ des triangles déformés; à partir de leur position précédente $Q_n$ et des forces $F^n$. En bouclant sur l'indice n à l'étape 36, on réalise une intégration sur tous les objets déformés. L'estimation des nouvelles positions des sommets $S_j$, s'effectue préférentiellement en utilisant les équations E1, E2 et E3 précitées.

Dans l'organigramme de la figure 7, on a représenté les deux intégrations respectives (des forces $F_j{}^n$ et des positions des sommets $S_j$ dans les objets déformés), séparément. Bien entendu, il peut être prévu de réaliser certaines des étapes 12 à 20, en même temps ou après certaines des étapes 30 à 36. Ce choix dépend de la structure des deux modules décrits ci-avant, que comporte le calculateur précité, et, le cas échéant, de la structure des données.

Il est préférentiellement prévu un test 42 pour savoir si l'objet a entièrement retrouvé sa forme de repos, à savoir : existe-t-il une arête dans l'objet, dont la longueur est sensiblement différente de celle de la longueur précédente ?

En parcourant les triangles, si le calculateur ne trouve pas une telle arête, c'est que l'objet est revenu à sa forme de repos initiale et le traitement s'arrête en 40.

Sinon, une image de l'objet est affichée par le moniteur VISU précité et une boucle de temps (étape 44) est incrémentée, pour passer à un temps suivant et montrer un retour progressif à une forme de repos de l'objet, en utilisant, le cas échéant, l'équation E3. Cette boucle de temps peut être initialisée après la première étape 10 de départ.

Bien entendu, l'invention n'est pas limitée à la forme de réalisation décrite précédemment à titre d'exemple, elle s'étend à d'autres variantes définies néanmoins dans le cadre des revendications ci-après.

Ainsi, on comprendra que l'invention ne se limite pas à une application à la simulation de la déformation de tissus corporels mous. Comme décrit précédemment, le déplacement d'un objet rigide (par exemple pour un os solidaire d'un muscle), solidaire du tissus mous, peut aussi être simulé. Il conviendra, le cas échéant, d'utiliser un torseur (d'expression connue en soi), plutôt qu'un tenseur de déformation du type décrit ci-avant.

La formule de l'énergie de déformation $W$, aussi bien dans une maille triangulaire que tétraédrique, est donnée ci-avant à titre d'exemple et dépend du matériau dans lequel est prévu l'objet dont la déformation est simulée. Néanmoins, elle s'exprime de façon générale par une combinaison des traces du tenseur E et du tenseur $E^2$. Dans des cas particuliers, seule la trace du tenseur E (ou du tenseur $E^2$) peut intervenir.

ANNEXE

$$F1: \quad C = \nabla\Phi^{t}\nabla\Phi.$$

$$F2: \quad \Phi(\mathbf{X}) = \sum_{j=0}^{2} \Lambda_j(\mathbf{X})\mathbf{Q}_j \implies \nabla\Phi = \sum_{j=0}^{2} \alpha_j \otimes \mathbf{Q}_j \quad \text{où} \quad \alpha_j = \frac{l_j}{2A}\mathbf{n}_j.$$

$$F3: \quad C = \sum_{j,k} (\mathbf{Q}_j \cdot \mathbf{Q}_k)(\alpha_j \otimes \alpha_k).$$

F4 :

$$C = \sum_j r^2 (\alpha_j \otimes \alpha_j) + \sum_{\substack{j,k \\ j \neq k}} \left( r^2 - \frac{L_p^2}{2} \right) (\alpha_j \otimes \alpha_k)$$

$$= r^2 \sum_{j,k} (\alpha_j \otimes \alpha_k) - \frac{1}{2} \sum_{\substack{j,k \\ j \neq k}} L_p^2 (\alpha_j \otimes \alpha_k)$$

$$= -\frac{1}{2} \sum_{\substack{j,k \\ j \neq k}} L_p^2 (\alpha_j \otimes \alpha_k)$$

F5 :

$$W = \frac{\lambda}{2} (tr\, E)^2 + \mu tr\, E^2$$

$$tr\, E = \frac{1}{2} \boxed{tr\, C} - 1$$

$$tr\, E^2 = \frac{1}{4} \boxed{tr\, C^2} - tr\, E - \frac{1}{2}$$

F6 :

$$tr\, C = -\frac{1}{2} \sum_{\substack{j,k \\ j \neq k}} L_p^2 (\alpha_j \cdot \alpha_k) \ .$$

F7 :

$$\overrightarrow{P_p P_q} \cdot \overrightarrow{P_p P_r} = \begin{cases} l_j\, l_k\, cos(\theta_p) = \frac{1}{2} (l_j^2 + l_k^2 - l_p^2) = \mathcal{K}_p & si\ q \neq r\ ,\ j = comp(p,q) \\ & et\ k = comp(p,r) \\ l_j^2 & si\ q = r\ ,\ j = comp(p,q) \end{cases}$$

R1 :

$$(\alpha_j \cdot \alpha_k) = \begin{cases} -\dfrac{l_j\, l_k}{4 \mathcal{A}^2}\, cos(\theta_p) = -\dfrac{1}{4 \mathcal{A}^2} \mathcal{K}_p & si\ j \neq k\ et\ p = comp(j,k)\ , \\ \dfrac{l_j^2}{4 \mathcal{A}^2} & si\ j = k \end{cases}$$

$$F8 \quad : \qquad tr\, C = \frac{1}{4\mathcal{A}^2} \sum_p L_p^2\, \mathcal{K}_p\,.$$

F9 :

$$\boxed{tr\, E = \frac{1}{8\mathcal{A}^2} \sum_p \left(L_p^2 - l_p^2\right) \mathcal{K}_p = \frac{1}{8\mathcal{A}^2} \left[\left(L_0^2 - l_0^2\right)\mathcal{K}_0 + \left(L_1^2 - l_1^2\right)\mathcal{K}_1 + \left(L_2^2 - l_2^2\right)\mathcal{K}_2\right]}$$

$$F10 \quad : \qquad tr\, C^2 = \frac{1}{4} \sum_{\substack{j,k \\ j \neq k}} \sum_{\substack{m,n \\ m \neq n}} L_p^2\, L_q^2\, (\alpha_j\,.\,\alpha_n)\,(\alpha_k\,.\,\alpha_m)$$

F11 :

$$\mathbf{F}_0^T = \frac{\partial W}{\partial \mathbf{Q}_0} \;=\; \frac{1}{32\mathcal{A}^4}\Bigg[ (\lambda + \mu)\left(\sum_p \left(L_p^2 - l_p^2\right)\mathcal{K}_p\right)\left(\overrightarrow{\mathbf{Q}_2\mathbf{Q}_0}\,\mathcal{K}_1 + \overrightarrow{\mathbf{Q}_1\mathbf{Q}_0}\,\mathcal{K}_2\right)$$

$$+ \; \mu\bigg( \left(L_1^2 - l_1^2\right) l_0^2 (l_2^2\, \overrightarrow{\mathbf{Q}_2\mathbf{Q}_0} - \mathcal{K}_0 \overrightarrow{\mathbf{Q}_1\mathbf{Q}_0}) + \left(L_2^2 - l_2^2\right) l_0^2 (l_1^2\, \overrightarrow{\mathbf{Q}_1\mathbf{Q}_0} - \mathcal{K}_0 \overrightarrow{\mathbf{Q}_2\mathbf{Q}_0})$$

$$-\left(L_0^2 - l_0^2\right)(l_1^2\, \mathcal{K}_1\, \overrightarrow{\mathbf{Q}_1\mathbf{Q}_0} + l_2^2\, \mathcal{K}_2\, \overrightarrow{\mathbf{Q}_2\mathbf{Q}_0})\bigg)\Bigg]$$

$$F12 \quad : \qquad \nabla\Phi \;=\; \sum_{j=0}^{3} \alpha_j \otimes \mathbf{Q}_j \qquad\qquad \alpha_j = \frac{\mathcal{A}_j}{3\mathcal{V}}\mathbf{n}_j$$

$$F13 \quad : \qquad C \;=\; \sum_{j,k} (\mathbf{Q}_j\,.\,\mathbf{Q}_k)(\alpha_j \otimes \alpha_k)$$

F14 :

$$(\mathbf{Q}_j\,.\,\mathbf{Q}_k) = \begin{cases} r^2 - \dfrac{L_{jk}^2}{2} & \text{si } j \neq k \\[2mm] r^2 & \text{si } j = k \end{cases} \qquad \Longrightarrow \qquad \boxed{C = -\frac{1}{2} \sum_{\substack{j,k \\ j \neq k}} L_p^2 (\alpha_j \otimes \alpha_k)}$$

$$\text{F15} : \qquad W = \frac{\lambda}{2}(tr\,E)^2 + \mu tr\,E^2$$

$$tr\,E = \frac{1}{2}\boxed{tr\,C} - \frac{3}{2}$$

$$tr\,E^2 = \frac{1}{4}\boxed{tr\,C^2} - tr\,E - \frac{3}{4}$$

F16 :

$$(\alpha_j \cdot \alpha_k) = \begin{cases} -\dfrac{1}{9\mathcal{V}^2}\mathcal{K}_{jk} & \text{si } j \neq k \\[2ex] \dfrac{1}{9\mathcal{V}^2}\mathcal{A}_j^2 & \text{si } j = k \end{cases}$$

$$\text{avec } \mathcal{K}_{jk} = \frac{2\,l_{lm}^2\,(l_{jl}^2 + l_{kl}^2 - l_{jk}^2) - (l_{jl}^2 + l_{lm}^2 - l_{jm}^2)(l_{kl}^2 + l_{lm}^2 - l_{km}^2)}{16}$$

$$\text{F17} : \qquad tr\,C = \frac{1}{9\mathcal{V}^2}\sum_{\text{Arêtes}(j,k)} L_{jk}^2\,\mathcal{K}_{jk}$$

F18 :

$$tr\,C^2 = \frac{1}{81\,\mathcal{V}^4}\left[ \frac{1}{2}\sum_{\text{arêtes}(j,k)} L_{jk}^4\,(\mathcal{K}_{jk}^2 + \mathcal{A}_j^2\,\mathcal{A}_k^2) \right. \qquad \text{6 termes}$$

$$+ \sum_{\substack{\text{couples d'arêtes} \\ ((j,k),(j,m))}} L_{jk}^2\,L_{jm}^2\,(\mathcal{K}_{jk}\,\mathcal{K}_{jm} - \mathcal{A}_j^2\,\mathcal{K}_{km}) \qquad \text{12 termes}$$

$$\left. + \sum_{\substack{\text{couples d'arêtes} \\ ((j,k),(m,n))}} L_{jk}^2\,L_{mn}^2\,(\mathcal{K}_{jn}\,\mathcal{K}_{km} + \mathcal{K}_{jm}\,\mathcal{K}_{kn}) \right] \qquad \text{3 termes}$$

$$\text{F19} : \qquad \boxed{W = \frac{1}{324\,\mathcal{V}^4}\left\{ \left(\frac{\lambda+\mu}{2}\right)\left[\sum_{\text{Arêtes}(j,k)}(L_{jk}^2 - l_{jk}^2)\,\mathcal{K}_{jk}\right]^2 + \mu\,\bar{\Delta} \right\}}$$

F20 :

$$\tilde{\Delta} = \frac{1}{2} \sum_{\text{arêtes}(j,k)} \left(L_{jk}^2 - l_{jk}^2\right)^2 \mathcal{A}_j^2 \mathcal{A}_k^2$$

$$- \sum_{\substack{\text{couples d'arêtes} \\ ((j,k),(j,m))}} \left(L_{jk}^2 - l_{jk}^2\right)\left(L_{jm}^2 - l_{jm}^2\right) \mathcal{A}_j^2 \mathcal{K}_{km}$$

$$+ \sum_{\substack{\text{couples d'arêtes} \\ ((j,k),(m,n))}} \left(L_{jk}^2 - l_{jk}^2\right)\left(L_{mn}^2 - l_{mn}^2\right) \left(\mathcal{K}_{jn}\,\mathcal{K}_{km} + \mathcal{K}_{jm}\,\mathcal{K}_{kn} - \mathcal{K}_{jk}\,\mathcal{K}_{mn}\right)$$

F21 :

$$\mathbf{F}_p = \frac{1}{162\,\mathcal{V}^4}\left\{ (\lambda + \mu)\left[\sum_{\text{Arêtes}(j,k)} \left(L_{jk}^2 - l_{jk}^2\right) \mathcal{K}_{jk}\right]\left(\sum_{\text{Arêtes}(j,p)} \overrightarrow{\mathbf{Q}_j\mathbf{Q}_p}\,\mathcal{K}_{jp}\right)\right.$$

$$+ \mu\left[\sum_{\text{Arêtes}(j,p)} \left(L_{jp}^2 - l_{jp}^2\right) \mathcal{A}_p^2\left(\overrightarrow{\mathbf{Q}_j\mathbf{Q}_p}\,\mathcal{A}_j^2 - \overrightarrow{\mathbf{Q}_k\mathbf{Q}_p}\,\mathcal{K}_{jk} - \overrightarrow{\mathbf{Q}_m\mathbf{Q}_p}\,\mathcal{K}_{jm}\right)\right.$$

$$\left.\left.+ \sum_{\substack{\text{Arêtes}(j,k) \\ j,k \neq p}} \left(L_{jk}^2 - l_{jk}^2\right)\left(\overrightarrow{\mathbf{Q}_m\mathbf{Q}_p}\,\mathcal{K}_{jkmp} - \overrightarrow{\mathbf{Q}_j\mathbf{Q}_p}\,\mathcal{A}_j^2\mathcal{K}_{kp} - \overrightarrow{\mathbf{Q}_k\mathbf{Q}_p}\,\mathcal{A}_k^2\mathcal{K}_{jp}\right)\right]\right]\right\}$$

R2 :  $W = \dfrac{1}{128\mathcal{A}^4}\left[(\lambda + \mu)\left(\sum_p \left(L_p^2 - l_p^2\right)\mathcal{K}_p\right)^2\right.$

$$\left.+ \mu\left(\sum_p \left(L_p^2 - l_p^2\right)^2 l_j^2 l_k^2 - 2\sum_{\substack{j,k \\ j \neq k}} \left(L_j^2 - l_j^2\right)\left(L_k^2 - l_k^2\right) l_p^2 \mathcal{K}_p\right)\right]$$

$$p = comp(j,k)$$

E1 :  $m_i \dfrac{d^2 \mathsf{P}_i}{dt^2} = \gamma_i \dfrac{d\mathsf{P}_i}{dt} + \mathsf{F}_i$

E2 :  $M\ddot{U} + C\dot{U} + KU = R$

$$E3 \; : \qquad \left(\frac{m_i}{\Delta t^2} - \frac{\gamma_i}{2\Delta t}\right)P_i^{t+1} = F_i + \frac{2m_i}{\Delta t^2}P_i^t - \left(\frac{m_i}{\Delta t^2} + \frac{\gamma_i}{2\Delta t}\right)P_i^{t-1}$$

**Revendications**

1. Dispositif de simulation de déformations de matériaux, notamment de tissus corporels mous, comprenant :

  - une zone-mémoire (MEM,MT) apte à stocker, pour un objet ayant une forme tridimensionnelle au moins :

    * des paramètres mécaniques du matériau de l'objet ($\lambda,\mu$),
    * des données de position de l'objet (Lj), prises en des sommets (Sj) d'au moins un maillage choisi (Tn), et
    * des données de force ($F_j^n$), représentant, en intensité et position, une sollicitation à exercer sur l'objet,

  - ainsi qu'un calculateur ($\mu$P,MT) capable de coopérer avec la zone-mémoire (MEM) pour évaluer de nouvelles positions des sommets (Sj), en fonction de la sollicitation exercée et des paramètres mécaniques du matériau,

    **caractérisé en ce que** le calculateur comprend:

  - un module (12,14,16,18,20) apte à déterminer itérativement, pour chaque maille, l'écart entre la longueur courante (lj) d'une arête de la maille et sa longueur précédente et/ou au repos (Lj), ainsi qu'à stocker des données de force respectives ($F_j^n$) relatives à l'énergie potentielle de déformation pour chaque sommet de la maille, les données de forces réspectives étant obtenues à partir dudit écart,
  - un module (30,32,36) apte à déterminer itérativement, pour chaque sommet, de nouvelles données de position de ce sommet (Sj(Qn)) en fonction de la composition des forces qui s'y exerce ($F_j^n$), de données portant sur au moins une position antérieure du sommet (Sj(Tn)) et des paramètres mécaniques du matériau.

2. Dispositif selon la revendication 1, **caractérisé en ce que**, pour un objet présentant la forme d'une enveloppe tridimensionnelle creuse, le maillage choisi est triangulaire, de sorte que le calculateur est apte à déterminer une composition des forces en chaque sommet de triangle, en fonction de l'écart entre la longueur courante de chaque arête du triangle et la longueur de cette arête au repos.

3. Dispositif selon l'une des revendications 1 et 2, **caractérisé en ce que**, pour un objet présentant une forme tridimensionnelle pleine, le maillage choisi est tétraédrique, de sorte que le calculateur est apte à estimer une composition des forces en chaque sommet de tétraèdre, en fonction de l'écart entre la longueur courante de chaque arête du tétraèdre et la longueur de cette arête au repos.

4. Dispositif selon l'une des revendications précédentes, **caractérisé en ce que** le calculateur est agencé pour déterminer des différences entre les carrés des longueurs courante (lj) et précédente et/ou au repos (Lj) de chaque arête pour déterminer ladite composition des forces.

5. Dispositif selon l'une des revendications précédentes, **caractérisé en ce que** la zone-mémoire est agencée pour stocker, en association avec chaque maille, des paramètres mécaniques du matériau de la maille ($\lambda_n,\mu_n$), au moins partiellement définis localement, en particulier au niveau de la maille ou d'éléments de celle-ci.

6. Dispositif selon la revendication 5, **caractérisé en ce que** le calculateur est agencé pour déterminer ledit écart de longueurs courante et au repos, en vue d'estimer une dérivée de l'énergie potentielle de déformation (*W*) de chaque maille par rapport à la position de chaque sommets de la maille, l'énergie potentielle de déformation étant exprimée en fonction d'un tenseur de Green-St Venant (*E*) et de coefficients mécaniques propres au matériau dans cette maille, ce qui fournit lesdites données de force par le sommet de la maille.

7. Dispositif selon la revendication 6, **caractérisé en ce que** lesdits paramètres mécaniques comprennent les coefficients de Lamé du matériau dans chaque maille considérée ($\lambda_n,\mu_n$).

**8.** Dispositif selon l'une des revendications précédentes, **caractérisé en ce qu'**il comporte un module pour élaborer une structure de données et agencé pour supprimer des arêtes (Ai) de maille qui relient deux sommets dits "virtuels" (Si).

**9.** Dispositif selon la revendication 8, **caractérisé en ce que** le module pour élaborer la structure de données est agencé en outre pour vérifier que le maillage respecte des propriétés de conformité prédéfinies.

**10.** Dispositif selon l'une des revendications précédentes, **caractérisé en ce que** le module (30,32,36), apte à déterminer les nouvelles données de position des sommets (Q'n) en fonction de la composition des forces en chaque sommet, est agencé pour déterminer lesdites nouvelles données de position, en fonction du temps (E3), ce qui permet de suivre une évolution temporelle des positions respectives des sommets.

**11.** Dispositif selon la revendication 10, **caractérisé en ce que** la détermination des nouvelles données de position des sommets (Q'n) utilise un modèle de résolution d'équation différentielle appliquée à chaque sommet.

**12.** Dispositif selon l'une des revendications précédentes, **caractérisé en ce que** le calculateur est capable de déterminer répétitivement les données de position des sommets du maillage, en vue de déterminer une évolution temporelle (t+$\Delta$t) desdites positions.

**13.** Dispositif selon la revendication 12, **caractérisé en ce qu'**il comporte une interface de visualisation (VISU,IG) propre à représenter l'objet suivant une forme prédéterminée et maillée selon le motif choisi, et **en ce que** l'interface de visualisation est apte à coopérer avec le calculateur pour représenter la forme de l'objet en mouvement.

**14.** Dispositif selon l'une des revendications précédentes, **caractérisé en ce qu'**il comporte une interface utilisateur (IU) munie d'un organe de saisie (CLA,MO) pour simuler une ou plusieurs forces globalement exercées sur l'objet.

**Patentansprüche**

**1.** Vorrichtung zur Materialverformungssimulation, insbesondere von weichen Körpergeweben, umfassend:

- eine Speicherzone (MEM,MT), fähig von einem Objekt mit dreidimensionaler Form abzuspeichern:

  * mechanische Parameter des Materials des Objekts ($\lambda,\mu$),
  * Positionsdaten des Objekts (Lj), gemessen an den Spitzen (Sj) wenigstens eines gewählten Netzwerks (Tn), und
  * Kraftdaten ($F_j^n$), welche Stärke und Position einer auf das Objekt auszuübenden Belastung darstellen,

- sowie einen Rechner ($\mu$P,MT), fähig mit der Speicherzone (MEM) zu kooperieren, um neue Positionen der Spitzen (Sj) zu ermitteln, in Abhängigkeit von der ausgeübten Belastung und den mechanischen Parametern des Materials,

**dadurch gekennzeichnet, dass** der Rechner umfasst:

- einen Modul (12,14,16,18,20), fähig für jede Masche den Unterschied zwischen der laufenden Länge (lj) einer Kante der Masche und ihrer vorhergehenden Länge und/oder Ruhezustandslänge (Lj) iterativ zu ermitteln sowie für jede Spitze der Masche jeweilige, die potentielle Verformungsenergie betreffende Kraftdaten ($F_j^n$) abzuspeichern, wobei man die jeweiligen Kraftdaten aufgrund des genannten Unterschieds erhält,
- einen Modul (30,32,36), fähig für jede Spitze neue Positionsdaten dieser Spitze (Sj(Qn)) in Abhängigkeit von der Zusammensetzung der dort ausgeübten Kräfte ($F_j^n$), von Daten bezüglich wenigstens einer früheren bzw. vorhergehenden Position der Spitze (Sj(Tn)) und von mechanischen Parametern des Materials iterativ zu ermitteln.

**2.** Vorrichtung nach Anspruch 1, **dadurch gekennzeichnet, dass** für ein Objekt mit der Form einer hohlen dreidimensionalen Hülle das gewählte Netzwerk dreieckig ist, so dass der Rechner fähig ist, in jeder Spitze des Dreiecks eine Kräftezusammensetzung zu ermitteln, in Abhängigkeit von dem Unterschied zwischen der laufenden Länge jeder Kante des Dreiecks und der Länge dieser Kante im Ruhezustand.

**3.** Vorrichtung nach einem der Ansprüche 1 und 2, **dadurch gekennzeichnet, dass** für ein Objekt mit der Form einer vollen dreidimensionalen Hülle das gewählte Netzwerk tetraederförmig ist, so dass der Rechner fähig ist, in jeder Spitze des Tetraeders eine Kräftezusammensetzung zu ermitteln, in Abhängigkeit von dem Unterschied zwischen der laufenden Länge jeder Kante des Tetraeders und der Länge dieser Kante im Ruhezustand.

**4.** Vorrichtung nach einem der vorangehenden Ansprüche, **dadurch gekennzeichnet, dass** der Rechner fähig ist, Differenzen zwischen den Quadraten der laufenden (Ij) und der vorhergehenden Länge und/oder Ruhezustandslänge jeder Kante zu ermitteln, um die genannte Kräftezusammensetzung zu bestimmen.

**5.** Vorrichtung nach einem der vorangehenden Ansprüche, **dadurch gekennzeichnet, dass** die Speicherzone fähig ist, für jede Masche, speziell von der gesamten Masche oder von Elementen von dieser, mechanische Parameter des Materials der Masche ($\lambda_n, \mu_n$) zu speichern, die zumindest teilweise lokal definiert sind.

**6.** Vorrichtung nach Anspruch 5, **dadurch gekennzeichnet, dass** der Rechner fähig ist, den genannten Unterschied zwischen laufender Länge und Ruhezustandslänge zu ermitteln, um eine Ableitung der potentiellen Verformungsenergie ($W$) jeder Masche in Bezug auf die Position jeder Maschenspitze zu schätzen, wobei die potentielle Verformungsenergie ausgedrückt wird in Abhängigkeit von einem Green-St.Venant-Tensor ($E$) und von für das Material in dieser Masche typischen mechanischen Koeffizienten, was die genannten Kraftdaten für die Spitze der Masche liefert.

**7.** Vorrichtung nach Anspruch 6, **dadurch gekennzeichnet, dass** die genannten mechanischen Parameter die Lame-Koeffizienten des Materials in jeder betrachteten Masche ($\lambda_n, \mu_n$) umfassen.

**8.** Vorrichtung nach einem der vorangehenden Ansprüche, **dadurch gekennzeichnet, dass** sie einen Modul umfasst, der dazu dient, eine Datenstruktur auszuarbeiten und Maschenkanten (Ai) wegfallen zu lassen, die zwei sogenannte "virtuelle" Spitzen (Si) verbinden.

**9.** Vorrichtung nach Anspruch 8, **dadurch gekennzeichnet, dass** der Modul zur Ausarbeitung einer Datenstruktur außerdem fähig ist, zu verifizieren, dass das Netzwerk vorher definierten Konformitätseigenschaften entspricht.

**10.** Vorrichtung nach einem der vorangehenden Ansprüche, **dadurch gekennzeichnet, dass** der genannte Modul (30,32,36), der fähig ist, die neuen Positionsdaten der Spitzen (Q'n) in Abhängigkeit von der Kräftezusammensetzung in jeder Spitze zu ermitteln, so konzipiert ist, dass er die genannten neuen Positionsdaten in Abhängigkeit von der Zeit (E3) ermittelt, was ermöglicht, eine zeitliche Entwicklung der jeweiligen Positionen der Spitzen zu verfolgen.

**11.** Vorrichtung nach Anspruch 10, **dadurch gekennzeichnet**, das die Ermittlung der neuen Positionsdaten der Spitzen (Q'n) ein auf jede Spitze angewendetes Differentialgleichungsauflösungsmodell benutzt.

**12.** Vorrichtung nach einem der vorangehenden Ansprüche, **dadurch gekennzeichnet, dass** der Rechner fähig ist, hinsichtlich der Ermittlung einer zeitlichen Entwicklung (t+Δt) der genannten Positionen die Positionsdaten der Spitzen des Netzwerks wiederholt zu ermitteln.

**13.** Vorrichtung nach Anspruch 12, **dadurch gekennzeichnet, dass** sie ein Visualisierungs-Interface (VISU,IG) umfasst, fähig das Objekt entsprechend einer vorher festgelegten Form und maschig gemäß einem gewählten Muster darzustellen, und dadurch, dass das Visualisierungs-Interface fähig ist, mit dem Rechner zu kooperieren, um die Form des Objekts in Bewegung darzustellen.

**14.** Vorrichtung nach einem der vorangehenden Ansprüche, **dadurch gekennzeichnet, dass** sie ein Benutzer-Interface (IU) umfasst, ausgestatte mit einem Erfassungs- bzw. Zugriffsorgan (CLA, MO), um eine oder mehrere global auf das Objekt ausgeübte Kräfte zu simulieren.

**Claims**

**1.** Device for simulating deformations of materials, in particular of soft body tissues, comprising:

- a memory area (MEM, MT) able to store, for an object having a three-dimensional form at least:

* mechanical parameters of the material of the object ($\lambda$, $\mu$),
* position data for the object (Lj), taken at vertices (Sj) of at least one chosen mesh (Tn), and
* force data ($F_j^n$), representing, in intensity and position, a loading to be exerted on the object,

- as well as a computer ($\mu$P, MT) capable of cooperating with the memory area (MEM) so as to evaluate new positions of the vertices (Sj), as a function of the loading exerted and of the mechanical parameters of the material,

   **characterized in that** the computer comprises:

- a module (12, 14, 16, 18, 20) able to determine iteratively, for each mesh cell, the discrepancy between the current length (lj) of an edge of the mesh cell and its previous and/or rest length (Lj), as well as to store respective force data ($F_j^n$) relating to the potential energy of deformation for each vertex of the mesh cell, the respective force data being obtained on the basis of the said discrepancy, and
- a module (30, 32, 36) able to determine iteratively, for each vertex, new position data of this vertex (Sj(Qn)) as a function of the composition of the forces exerted thereon ($F_j^n$), of data pertaining to at least one earlier position of the vertex (Sj(Tn)) and of the mechanical parameters of the material.

2. Device according to Claim 1, **characterized in that**, for an object exhibiting the form of a hollow three-dimensional envelope, the chosen mesh is triangular, so that the computer is able to determine a composition of the forces at each vertex of a triangle, as a function of the discrepancy between the current length of each edge of the triangle and the rest length of this edge.

3. Device according to either of Claims 1 and 2, **characterized in that**, for an object exhibiting a solid three-dimensional form, the chosen mesh is tetrahedral, so that the computer is able to estimate a composition of the forces at each vertex of a tetrahedron, as a function of the discrepancy between the current length of each edge of the tetrahedron and the rest length of this edge.

4. Device according to one of the preceding claims, **characterized in that** the computer is devised to determine differences between the squares of the current (lj) and previous and/or rest (Lj) lengths of each edge so as to determine the said composition of the forces.

5. Device according to one of the preceding claims, **characterized in that** the memory area is devised to store, in association with each mesh cell, mechanical parameters of the material of the mesh cell ($\lambda_n$, $\mu_n$), at least partially defined locally, in particular at the level of the mesh cell or of elements of the latter.

6. Device according to Claim 5, **characterized in that** the computer is devised to determine the said discrepancy of current and rest lengths, with a view to estimating a derivative of the potential energy of deformation (W) of each mesh cell with respect to the position of each vertex of the mesh cell, the potential energy of deformation being expressed as a function of a Green-St Venant tensor (E) and of mechanical coefficients specific to the material in this mesh cell, thereby providing the said force data for the vertex of the mesh cell.

7. Device according to Claim 6, **characterized in that** the said mechanical parameters comprise the Lamé coefficients of the material in each mesh cell considered ($\lambda_n$, $\mu_n$).

8. Device according to one of the preceding claims, **characterized in that** it comprises a module for formulating a data structure and devised to delete mesh cell edges (Ai) that connect two so-called "virtual" vertices (Si).

9. Device according to Claim 8, **characterized in that** the module for formulating the data structure is devised moreover to verify that the mesh complies with predefined conformity properties.

10. Device according to one of the preceding claims, **characterized in that** the module (30, 32, 36), able to determine the new position data of the vertices (Q'n) as a function of the composition of the forces at each vertex, is devised to determine the said new position data, as a function of time (E3), thereby making it possible to follow a temporal evolution of the respective positions of the vertices.

11. Device according to Claim 10, **characterized in that** the determination of the new position data of the vertices (Q'n) uses a model of differential equation solution applied to each vertex.

**12.** Device according to one of the preceding claims, **characterized in that** the computer is capable of determining repetitively the position data of the vertices of the mesh, with a view to determining a temporal evolution (t+Δt) of the said positions.

**13.** Device according to Claim 12, **characterized in that** it comprises a display interface (VISU, IG) suitable for representing the object according to a predetermined form meshed according to the chosen pattern, and **in that** the display interface is able to cooperate with the computer so as to represent the form of the object while moving.

**14.** Device according to one of the preceding claims, **characterized in that** it comprises a user interface (IU) furnished with an input facility (CLA, MO) for simulating one or more forces exerted globally on the object.

FIG.1

FIG.2A

FIG.2B

FIG.3A

FIG.3B

FIG.3C

FIG.3D

FIG.4A

FIG.4B

FIG.5A

FIG.5B

FIG.6

FIG.7